(19) **Europäisches Patentamt / European Patent Office / Office européen des brevets**

(11) **EP 3 804 050 B1**

(12) # FASCICULE DE BREVET EUROPEEN

(45) Date de publication et mention de la délivrance du brevet:
**28.12.2022 Bulletin 2022/52**

(21) Numéro de dépôt: **19731607.8**

(22) Date de dépôt: **31.05.2019**

(51) Classification Internationale des Brevets (IPC):
*H01S 3/00* (2006.01)    *H01S 3/094* (2006.01)
*H01S 3/0941* (2006.01)    *H01S 3/102* (2006.01)
*H01S 3/23* (2006.01)

(52) Classification Coopérative des Brevets (CPC):
**H01S 3/005; H01S 3/0057; H01S 3/094053;**
H01S 3/0071; H01S 3/0085; H01S 3/094061;
H01S 3/09415; H01S 3/1024; H01S 3/2308;
H01S 3/2316; H01S 2301/03; H01S 2301/206

(86) Numéro de dépôt international:
**PCT/EP2019/064225**

(87) Numéro de publication internationale:
**WO 2019/233900 (12.12.2019 Gazette 2019/50)**

(54) **PROCÉDÉS ET SYSTÈMES POUR LA GÉNÉRATION D'IMPULSIONS LASER DE FORTE PUISSANCE CRÊTE**

VERFAHREN UND SYSTEME ZUR ERZEUGUNG VON LASERIMPULSEN MIT HOHER SPITZENLEISTUNG

METHODS AND SYSTEMS FOR GENERATING HIGH PEAK POWER LASER PULSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2018 FR 1854860**

(43) Date de publication de la demande:
**14.04.2021 Bulletin 2021/15**

(73) Titulaire: **Imagine Optic**
**91400 Orsay (FR)**

(72) Inventeurs:
• **GORJU, Guillaume**
**91410 DOURDAN (FR)**
• **AYEB, Adam**
**91400 ORSAY (FR)**
• **LEVECQ, Xavier**
**91190 GIF SUR YVETTE (FR)**

(74) Mandataire: **Osha Liang**
**2, rue de la Paix**
**75002 Paris (FR)**

(56) Documents cités:
  **EP-A1- 3 029 860**    **US-A1- 2012 002 686**
  **US-A1- 2014 293 404**    **US-A1- 2018 080 770**

• **VISHWA PAL ET ALEP: "Generating flat-top beams with extended depth of focus", APPLIED OPTICS, vol. 57, no. 16, 1 juin 2018 (2018-06-01), page 4583, XP055557499, US ISSN: 1559-128X, DOI: 10.1364/AO.57.004583**
• **H. Nieuwenhuijzen: "On the Doppler frequency shift of light using rotating mirrors", Bulletin of the Astronomical Institutes of the Netherlands, Volume 20, 31 décembre 1969 (1969-12-31), pages 300-308, XP055623766, Amsterdam Extrait de l'Internet: URL:http://adsabs.harvard.edu/full/1969BAN .... 20..300N [extrait le 2019-09-18]**
• **LUIS BERNAL ET AL: "Optical Doppler shift measurement using a rotating mirror", AMERICAN JOURNAL OF PHYSICS, vol. 75, no. 3, 1 mars 2007 (2007-03-01), pages 216-219, XP055623767, US ISSN: 0002-9505, DOI: 10.1119/1.2404958**

**(Cont. page suivante)**

- **DI TEODORO F ET AL: "SBS-managed high-peak-power nanosecond-pulse fiber-based master oscillator power amplifier", OPTICS LETTERS, OPTICAL SOCIETY OF AMERICA, US, vol. 38, no. 13, 1 juillet 2013 (2013-07-01), pages 2162-2164, XP001582989, ISSN: 0146-9592, DOI: HTTP://DX.DOI.ORG/10.1364/OL.38.002162**

## Description

### Domaine technique de l'invention

La présente description concerne des procédés et systèmes pour la génération d'impulsions laser de forte puissance crête destinées au choc laser. La présente description trouve des applications notamment dans le grenaillage laser, la spectroscopie par choc laser, la génération d'ultrasons par laser ou le nettoyage laser de composants.

### Etat de l'art

Les applications de traitement de surface par choc laser, c'est-à-dire avec formation de plasma, nécessitent des impulsions de très forte puissance crête, typiquement autour de 10 mégawatts (MW) ou davantage, c'est-à-dire typiquement des impulsions dont la durée est de l'ordre de quelques dizaines de nanosecondes ou moins et qui présentent des énergies de plus d'une centaine de millijoules. Ces impulsions, focalisées sur des zones de quelques mm$^2$ typiquement, permettent d'atteindre des densités d'énergie de l'ordre de dizaines de Joule par centimètre carré pour la formation des chocs laser. Ces applications comprennent par exemple la spectroscopie par choc laser, le nettoyage laser, la génération d'ultrasons par laser, par exemple pour l'analyse de la structure cristalline d'un matériau et le « grenaillage laser » (ou « laser shock peening » selon l'expression anglo-saxonne) pour l'amélioration de la durée de vie et de la résistance mécanique de pièces.

Le grenaillage laser est décrit par exemple dans les brevets US 6002102 et EP 1 528 645. Une première fine couche absorbante est déposée sur la pièce à traiter. En opération, les impulsions laser de fortes puissances crête vaporisent la couche absorbante ce qui génère un plasma chaud. L'expansion du plasma entraîne une onde de compression intense qui permet de générer des précontraintes en profondeur dans le matériau de la pièce à traiter. Une deuxième couche, dite couche de confinement, transparente au rayonnement, par exemple de l'eau ou un matériau transparent à la longueur du rayonnement incident, par exemple du Quartz, aide l'onde de choc à se détendre vers l'intérieur de la surface à traiter. Ce procédé, appelé « grenaillage laser» permet d'augmenter la résistance mécanique des pièces à la fatigue cyclique. Ce procédé est généralement réalisé en transportant le faisceau en espace libre jusqu'à la zone à traiter.

Le transport de faisceaux laser de fortes puissances en espace libre engendre cependant des problèmes de sécurité et rend très complexe l'accessibilité à des endroits confinés ou hostiles (milieux immergés par exemple).

Pour accéder à des surfaces localisées dans des milieux confinés ou hostiles, les fibres optiques semblent des outils bien adaptés, comme décrit par exemple dans les brevets US4937421 ou US6818854. Néanmoins, certains des procédés précédemment décrits, comme le grenaillage laser ou le nettoyage laser de surface, s'effectuent généralement dans des environnements industriels poussiéreux et les seuils de dommages des surfaces d'entrée et de sortie des fibres s'en trouvent nettement diminués. Par ailleurs, en dehors des aspects de propreté, pour les lasers pulsés de durée d'impulsion inférieure à 1 µs, le niveau de puissance crête pouvant être injectée dans une fibre est limité par le seuil de dommage diélectrique du matériau constituant le cœur de la fibre. Ainsi, pour des impulsions de 10 ns à 1064 nm le seuil de dommage de l'interface air-silice est autour de 1 GW/cm$^2$.

Pour limiter les risques d'endommagement à l'injection et à la propagation, l'utilisation de guides d'onde avec des larges diamètres de cœur est préférée. Or les gros cœurs (typiquement supérieurs à 1 mm) sont peu flexibles et des courbures trop importantes créent des pertes par ondes évanescentes qui peuvent endommager la fibre. Un ensemble de fibres optiques (ou « bundle ») peut être utilisé, comme décrit par exemple dans le brevet US6818854. Cependant, pour limiter les pertes à l'injection et à la propagation dans ce type de composant, il est préférable d'injecter l'énergie lumineuse dans chaque fibre individuellement, ce qui rend l'injection complexe et coûteuse ; par ailleurs, il est nécessaire de prévoir en sortie du composant un système optique de focalisation de forte ouverture, ce qui rend le système optique complexe, onéreux et encombrant.

US 2014/293404 (PIERROT SIMONETTE) divulgue un système de génération d'impulsions laser de forte puissance crête comprenant un module de mise en forme temporelle desdites impulsions.

Notamment pour ces raisons, l'utilisation de fibres optiques pour le transport d'impulsions est en pratique limitée au transport d'impulsions de relativement faible puissance crête (inférieure à 10 MW) et pour adresser des zones faciles d'accès (chemin non tortueux).

Il y a donc un besoin pour la génération d'impulsions de forte puissance crête au moyen d'un système avec un dispositif fibré, qui permette de repousser les seuils d'endommagement des fibres et améliorer la souplesse du dispositif fibré afin d'éviter sa détérioration optique par contraintes mécaniques.

Un objet de la présente description est un procédé et un système de génération d'impulsions de forte puissance crête (typiquement autour de 10 MW ou au-dessus), autorisant une injection sécurisée dans un dispositif fibré et assurant une propagation sécurisée sur de longues distances tout en conservant une grande souplesse.

RESUME DE L'INVENTION

Selon un premier aspect, la présente description concerne un système de génération d'impulsions laser de forte puissance crête, comprenant :

- au moins une première source lumineuse pour l'émission de premières impulsions laser nanosecondes comprenant une ou plusieurs raie(s) laser;
- un dispositif fibré pour le transport desdites premières impulsions laser, comprenant au moins une première fibre multimode avec un cœur unique agencé pour recevoir lesdites premières impulsions laser;
- un module de mise en forme temporelle desdites premières impulsions laser, agencé en amont du dispositif fibré, configuré pour réduire la densité spectrale de puissance par réduction de la cohérence temporelle desdites premières impulsions, ledit module de mise en forme temporelle comprenant un dispositif réfléchissant tournant autour d'un axe de rotation donné, configuré pour réfléchir lesdites premières impulsions incidentes avec un élargissement spectral de type Doppler.

Dans la présente description, on entend par « forte puissance crête » des impulsions laser présentant une puissance crête de l'ordre de, ou supérieure ou égale à, 10 MW. De telles impulsions sont adaptées, après focalisation sur des surfaces de quelques mm$^2$, typiquement entre 0,1 et 10 mm$^2$, à la génération de chocs laser dans un matériau donné, par exemple pour des applications de grenaillage laser, nettoyage de surface, génération d'ultrasons, spectroscopie, etc.

Par impulsion nanoseconde, on comprend une impulsion dont la durée est comprise entre 1 ns et 100 ns, avantageusement entre 5 nanosecondes et 20 nanosecondes, ce qui correspond à une durée d'impulsion préférée pour la génération de chocs laser. Lesdites premières impulsions peuvent comprendre une ou une pluralité de raies laser.

Le système ainsi décrit permet, grâce à la réduction de la densité spectrale de puissance (DSP) par réduction de la cohérence temporelle des impulsions en amont du dispositif fibré, de disposer de très fortes puissances crêtes pour les impulsions incidentes sur le matériau dans lequel on veut générer des chocs laser tout en sécurisant les interfaces d'entrée et de sortie du dispositif fibré. En effet, la réduction de la cohérence temporelle permet de réduire la DSP avec une réduction limitée de l'énergie. La réduction de la DSP à énergie quasi constante ou avec une faible réduction de l'énergie permet de limiter les surintensités attribuées au « speckle » (également appelé « scintillement » ou « tavelures »), de sécuriser l'injection dans le dispositif fibré et de limiter les effets non linéaires. L'utilisation d'une fibre multimode de petit diamètre est alors possible, typiquement, inférieur à 1 mm, avantageusement inférieur à 300 μm, ce qui confère une plus grande souplesse au dispositif fibré, et de ce fait un accès plus facile à des milieux confinés, avec des diamètres de courbure des fibres qui peuvent être réduits à moins de 15 cm.

Le module de mise en forme temporelle défini dans la présente description permet un élargissement du spectre de la ou des raie(s) laser contenues dans lesdites premières impulsions.

Le module de mise en forme temporelle est ainsi configuré pour réduire la densité spectrale de puissance de telle sorte que l'intensité lumineuse des impulsions se trouve en-dessous du seuil de rétrodiffusion Brillouin stimulée dans le dispositif fibré. On limite ainsi les pertes d'énergie lumineuse dues aux effets non linéaires dans les fibres, notamment l'effet Brillouin. Le seuil de rétrodiffusion Brillouin diminue lorsque le diamètre de la fibre diminue (et la longueur de fibre augmente) et augmente lorsque la largeur spectrale de de la source devient supérieure à la largeur spectrale de la raie Brillouin. Ainsi, en réduisant la DSP des impulsions laser, par exemple par élargissement du spectre ou multiplication des raies laser, il est possible de garder un seuil de rétrodiffusion Brillouin élevé tout en réduisant les diamètres de cœur et/ou en augmentant la longueur de fibre. En effet, le calcul du seuil Brillouin tient compte de la convolution entre le profil spectral de la source et celui du gain Brillouin.

Selon un ou plusieurs exemples de réalisation, la diminution de la DSP est obtenue en outre par multiplication de la ou des raie(s) laser contenues dans lesdites premières impulsions, par exemple au moyen d'un modulateur acousto-optique. Avantageusement, la multiplication de la ou des raie(s) laser contenues dans lesdites premières impulsions est réalisée en amont de l'élargissement spectral.

Selon un ou plusieurs exemples de réalisation, le dispositif réfléchissant tournant est oscillant ou en rotation autour dudit axe de rotation. Il comprend une ou plusieurs surfaces réfléchissantes. Les impulsions incidentes sur la ou lesdites surfaces réfléchissantes subissent un décalage Doppler variable spatialement du fait de la vitesse angulaire variable en chaque point de la ou desdites surfaces. Ainsi, les impulsions laser réfléchies par ledit dispositif réfléchissant tournant présente un élargissement spectral et par voie de conséquence une diminution de la DSP. En outre les cohérences spatiale et temporelle des impulsions laser sont réduites, ce qui contribue à limiter les effets de speckle et les effets non linéaires.

Selon un ou plusieurs exemples de réalisation, la ou lesdites surfaces réfléchissantes sont agencées dans des plans perpendiculaires à un même plan, dit plan d'incidence des premières impulsions, comprenant les directions des vecteurs d'onde desdites premières impulsions laser incidentes sur le dispositif réfléchissant tournant et réfléchies par ledit dispositif réfléchissant tournant.

Selon un ou plusieurs exemples de réalisation, l'axe de rotation dudit dispositif réfléchissant tournant est perpendiculaire audit plan d'incidence desdites premières impulsions laser.

Selon un ou plusieurs exemples de réalisation, lesdites premières impulsions étant émises à une fréquence de répétition donnée, la vitesse de rotation ou d'oscillation dudit dispositif réfléchissant tournant est synchronisée avec la fréquence de répétition desdites premières impulsions, de telle sorte que chacune desdites premières impulsions soit incidente sur une surface réfléchissante dudit dispositif réfléchissant tournant avec un angle d'incidence constant.

Selon un ou plusieurs exemples de réalisation, ledit dispositif réfléchissant tournant comprend un simple miroir présentant un mouvement de rotation ou d'oscillation autour d'un axe perpendiculaire à un plan d'incidence desdites premières impulsions laser. Par exemple, le miroir réfléchissant est agencé de telle sorte que lesdites premières impulsions laser soient incidentes sur le miroir tournant selon une direction perpendiculaire au plan dudit miroir.

Selon un ou plusieurs exemples de réalisation, ledit dispositif réfléchissant tournant comprend une pluralité de surfaces réfléchissantes, deux surfaces consécutives formant un angle non nul, et des miroirs de renvoi permettant de renvoyer chacune desdites premières impulsions sur chacune desdites surfaces réfléchissantes. Par exemple, la pluralité des surfaces réfléchissantes sont agencées sur les faces d'un polygone. En multipliant les surfaces réfléchissantes, on peut multiplier l'élargissement Doppler. Ainsi par exemple, avec N surfaces réfléchissantes (N≥2) et N-1 miroirs de renvoi, on multiplie par N l'élargissement Doppler.

Selon un ou plusieurs exemples de réalisation, au moins une desdites surfaces réfléchissantes est non plane (par exemple concave ou convexe). Par exemple, la surface réfléchissante de sortie, c'est-à-dire sur laquelle l'impulsion laser est réfléchie en dernier, est non plane pour introduire un effet de convergence ou divergence de ladite impulsion.

Selon un ou plusieurs exemples de réalisation, le faisceau lumineux formé par lesdites premières impulsions laser et incident sur la ou lesdites surfaces réfléchissantes présente des dimensions inférieures aux dimensions de la ou desdites surfaces réfléchissantes.

Selon un ou plusieurs exemples de réalisation, le système de génération d'impulsions laser comprend en outre un module de mise en forme spatiale desdites premières impulsions laser en amont du dispositif fibré.

Selon un ou plusieurs exemples de réalisation, le module de mise en forme spatiale est configuré pour uniformiser la densité spatiale de puissance desdites impulsions en entrée du dispositif fibré. L'uniformisation de la densité spatiale de puissance permet de limiter les surintensités dans la fibre liées à la distribution d'intensité gaussienne d'un faisceau par exemple,

Par exemple, le module de mise en forme spatiale des impulsions permet de former des impulsions dont la répartition spatiale d'intensité est de type « top hat », c'est-à-dire avec une variation spatiale de l'intensité faible, typiquement limitée à +/- 10% (hors effets granulaires liés au Speckle). Une mise en forme spatiale de type « top hat » permet en outre d'adapter le faisceau lumineux formé par lesdites premières impulsions à la dimension du cœur de la fibre multimode.

Selon un ou plusieurs exemples de réalisation, le système de génération d'impulsions laser comprend en outre au moins un premier amplificateur optique pour l'amplification desdites premières impulsions en sortie du dispositif fibré. Un tel amplificateur optique peut permettre de compenser une éventuelle perte d'énergie résultant de l'utilisation du module de mise en forme temporelle.

Selon un ou plusieurs exemples de réalisation, le système de génération d'impulsions laser comprend en outre au moins une source lumineuse de pompe pour l'émission d'au moins un premier faisceau laser de pompe, destiné au pompage optique dudit au moins un premier amplificateur.

La source lumineuse de pompe comprend par exemple une diode laser ou un ensemble de diode laser

La source de pompe peut être continue ou pulsée avec un taux de répétions relativement bas, typiquement à la fréquence de répétition des dites premières impulsions laser, c'est-à-dire inférieur à quelques kilohertz.

Selon un ou plusieurs exemples de réalisation, la source de pompe est mise en forme temporellement de telle sorte à délivrer des impulsions de pompe dont la durée correspond sensiblement au temps de vie du niveau excité dudit au moins un premier amplificateur optique, soit typiquement de l'ordre de quelques centaines de microsecondes. Une mise en forme spatiale des faisceaux de pompe est également possible, par exemple pour adapter la dimension du faisceau de pompe au diamètre de cœur de la première fibre multimode.

Selon un ou plusieurs exemples de réalisation, ledit au moins un faisceau laser de pompe est injecté dans le dispositif fibré, avec lesdites premières impulsions. Le transport dans la fibre ainsi que le pompage du milieu amplificateur dudit au moins un premier amplificateur optique est alors copropagatif. Alternativement, le pompage optique du milieu amplificateur peut être transverse à ce dernier, par exemple au moyen de diodes laser.

Selon un ou plusieurs exemples de réalisation, ledit système de génération d'impulsions laser comprend une pluralité d'amplificateurs optiques, agencés par exemple les uns derrière les autres.

Selon un ou plusieurs exemples de réalisation, le dispositif fibré comprend en entrée ladite première fibre multimode et un ensemble de fibres légèrement multimodes couplés avec la dite première fibre multimode, formant par exemple ce qu'on appelle une première « lanterne photonique », et en sortie, une deuxième fibre multimode, couplée avec lesdites fibres légèrement multimodes et comprenant un cœur unique pour la sortie desdites premières impulsions laser. Ainsi, le dispositif fibré comprend deux « lanternes photoniques » tête bêche.

Dans la présente description, on appelle fibre légèrement multimode une fibre comprenant moins de 10 000 modes, typiquement entre 500 et 10 000 modes. Le diamètre de la fibre légèrement multimode est par exemple compris entre 0.05 et 0.2 mm. La fibre multimode (fibre d'entrée de la lanterne photonique) comprend plus de 20 000 modes. Le diamètre de la fibre multimode est par exemple compris entre 0.5 et 1 mm.

Un tel dispositif fibré, comprenant deux « lanternes photoniques » tête bêche, permet un transport des impulsions laser dans des fibres légèrement multimodes de plus faible diamètre et donc de gagner encore en souplesse pour le transport des impulsions laser, permettant un accès encore plus facile à des milieux confinés, tout en gardant en entrée et en sortie un cœur multimode unique.

Selon un ou plusieurs exemples de réalisation, le dispositif fibré comprend au moins une fibre dopée pour la pré-amplification optique desdites premières impulsions laser. Il peut s'agir de ladite première fibre multimode ou d'une ou plusieurs fibres légèrement multimodes dans le cas d'utilisation de lanternes photoniques. La pré-amplification optique permet de minimiser encore davantage la quantité d'énergie à injecter dans la première fibre multimode.

Alternativement, selon un ou plusieurs exemples de réalisation, le dispositif fibré n'est pas dopé. Sa fonction est limitée au transport desdites premières impulsions laser.

Selon un ou plusieurs exemples de réalisation, le système de génération d'impulsions laser comprend une deuxième source lumineuse pour l'émission de deuxièmes impulsions laser. Les deuxièmes impulsions laser présentent par exemple une longueur d'onde différente des premières impulsions laser. Les deuxièmes impulsions laser sont avantageusement transportés par le même dispositif fibré que les premières impulsions laser. Selon un ou plusieurs exemples de réalisation, le système de génération d'impulsions laser comprend un deuxième amplificateur optique agencé en sortie dudit dispositif fibré pour l'amplification desdites deuxièmes impulsions laser.

Selon un ou plusieurs exemples de réalisation, le système de génération d'impulsions laser comprend en outre des moyens de focalisation desdites impulsions laser de forte puissance crête en sortie du dispositif fibré, par exemple en sortie dudit au moins un amplificateur optique lorsque celui-ci est présent.

Selon un ou plusieurs exemples de réalisation, le système de génération d'impulsions laser comprend en outre des moyens de déplacement d'une extrémité distale du dispositif fibré. Lorsqu'on a besoin de générer des chocs laser à différents emplacements d'un matériau, par exemple dans le cas du traitement d'une surface, on peut déplacer le matériau ou déplacer l'extrémité distale du dispositif fibré, c'est-à-dire l'extrémité opposée à l'extrémité proximale placée du côté de la source.

Selon un deuxième aspect, la présente description concerne un procédé de génération d'impulsions laser de forte puissance crête comprenant :

- l'émission de premières impulsions laser nanosecondes;
- le transport desdites premières impulsions laser par un dispositif fibré comprenant au moins une première fibre multimode avec un cœur unique dans lequel sont injectées lesdites premières impulsions laser;
- la mise en forme temporelle desdites premières impulsions laser en amont du transport par ledit dispositif fibré, ladite mise en forme temporelle comprenant la réduction de la densité spectrale de puissance par réduction de la cohérence temporelle au moyen d'un dispositif réfléchissant tournant autour d'un axe de rotation donné, configuré pour réfléchir lesdites premières impulsions incidentes avec un élargissement spectral de type Doppler.

Le procédé ainsi décrit permet un élargissement de la ou des raie(s) comprises dans lesdites premières impulsions.

Selon un ou plusieurs exemples de réalisation, ladite mise en forme temporelle comprend en outre la multiplication de la ou des raie(s) comprises dans lesdites premières impulsions.

Selon un ou plusieurs exemples de réalisation, le procédé de génération d'impulsions laser comprend en outre la mise en forme spatiale desdites premières impulsions laser.

Selon un ou plusieurs exemples de réalisation, ladite mise en forme spatiale comprend l'uniformisation de la répartition spatiale d'intensité desdites premières impulsions laser.

Selon un ou plusieurs exemples de réalisation, le procédé de génération d'impulsions laser comprend en outre l'amplification optique desdites premières impulsions laser au moyen d'au moins un premier amplificateur optique agencé en sortie du dispositif fibré pour former lesdites impulsions laser de forte puissance crête

Selon un ou plusieurs exemples de réalisation, le procédé de génération d'impulsions laser comprend en outre l'injection dans ledit dispositif fibré d'au moins un premier faisceau laser de pompe pour le pompage dudit au moins un amplificateur optique.

BREVE DESCRIPTION DES FIGURES

D'autres avantages et caractéristiques de l'invention apparaîtront à la lecture de la description, illustrée par les figures suivantes :

- FIG. 1, un schéma illustrant un système de génération d'impulsions de forte puissance crête selon la présente description et sa mise en œuvre en milieu confiné ;

- FIGS 2A - 2D, des schémas illustrant la mise en forme temporelle des impulsions en amont du transport par le dispositif fibré, dans un exemple de système de génération d'impulsions de forte puissance crête selon la présente description, visant à élargir la ou les raie(s) laser par effet Doppler ;

- FIG. 3A - 3B, des schémas illustrant la mise en forme temporelle des impulsions en amont du transport par le dispositif fibré, dans un exemple de système de génération d'impulsions de forte puissance crête selon la présente description, visant à multiplier les raies laser ;

- FIG. 4A - 4B, des schémas illustrant des moyens pour la mise en forme spatiale des impulsions en amont du transport par le dispositif fibré, dans un exemple de système de génération d'impulsions de forte puissance crête selon la présente description, visant à former un faisceau de profil d'intensité constant ;

- FIG. 5, un schéma d'un exemple d'un système de génération d'impulsions de forte puissance crête selon la présente description, comprenant en outre un amplificateur optique desdites impulsions laser en sortie du dispositif fibré ;

- FIG. 6, un schéma d'un exemple de réalisation d'un dispositif fibré dans un exemple de système de génération d'impulsions de forte puissance crête selon la présente description.

Par soucis de cohérence, les éléments identiques sont repérés par les mêmes références dans les différentes figures.

DESCRIPTION DETAILLEE

On s'intéresse dans la présente description à la génération d'impulsions de forte puissance crête, adaptées pour la génération de chocs laser dans un matériau.

L'interaction d'impulsions d'éclairement élevé (puissance lumineuse délivrée par unité de surface), typiquement de l'ordre de quelques millions de watts par $cm^2$, avec un matériau, provoque un échauffement brutal de la surface éclairée et sa vaporisation sous forme d'un plasma qui se détend. C'est ce qu'on appelle un choc laser. Le choc laser est un mécanisme dans lequel le temps d'interaction lumière matière est très court, typiquement quelques dizaines de nanosecondes, et de ce fait, il n'y a pas de montée en température significative de la pièce à traiter comme pour les procédés de découpe laser ou de soudure laser. Le choc laser peut être favorisé dans une direction grâce à une couche de confinement. En effet, en l'absence d'une couche de confinement, l'extension du choc laser se fait sur $4\pi$ stéradians.

Plus précisément, dans le cas du grenaillage laser (ou « *laser shock peening* »), le choc laser ainsi créé permet d'introduire avec une très grande précision des contraintes résiduelles de compression profondes sur un matériau. Cela permet à terme d'augmenter la tenue à la fatigue en retardant l'initiation et la propagation de fissures. Une couche de confinement permet en outre de favoriser la détente du plasma vers l'intérieur de la pièce à traiter et d'améliorer l'efficacité du traitement.

Dans le cas de la LIBS (abréviation de l'expression anglo-saxonne «Light Induced Breakdown Spectroscopy »), le choc laser entraine une vaporisation de la surface à traiter. Les atomes et les ions éjectés sont portés dans des niveaux d'énergie excités et émettent, en se désexcitant, un spectre constitué de raies atomiques, dont la longueur d'onde permet d'identifier les éléments présents et dont l'intensité est proportionnelle à la concentration des atomes émetteurs.

Dans le cas du nettoyage par ablation, le plasma créé en surface sous l'effet du rayonnement se détend, provoquant ainsi un fractionnement et une expulsion des salissures sans endommager la surface à nettoyer.

Dans le contrôle par ultrasons générés par laser, on utilise l'onde ultrasonore formée par le plasma résultant de l'interaction impulsions - matière. L'onde ultrasonore se propage dans le matériau et se réfléchit aux interfaces. La déformation du matériau à l'arrivée de l'onde ultrasonore peut être analysée par le biais d'un interféromètre couplé à un deuxième faisceau laser. Cette analyse peut renseigner plusieurs caractéristiques liées au matériau à savoir son épaisseur, sa structure microscopique, ou encore d'éventuels défauts sous-jacents par exemple.

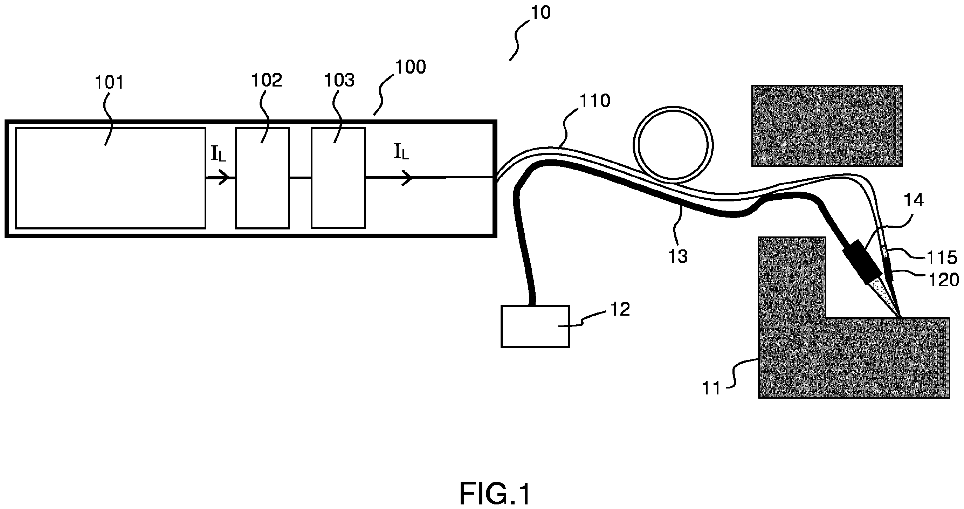

La FIG. 1 présente un schéma illustrant un système 10 de génération d'impulsions de forte puissance crête selon la présente description et sa mise en œuvre au sein d'un milieu confiné 11.

Le système 10 comprend dans une enceinte 100 pouvant être climatisée et isolée des poussières et de l'humidité, au moins une première source lumineuse 101 pour l'émission de premières impulsions laser $I_L$.

La source lumineuse 101 est par exemple un laser pulsé, émettant des impulsions de durée comprise entre 1 et 100 ns avantageusement entre 5 et 20 ns. La source lumineuse émet par exemple à 1,064 µm (longueur d'onde d'émission des lasers néodyme (Nd) :YAG) ou à 1,030 µm ( longueur de d'émission des lasers ytterbium (Yb) :YAG ). La source lumineuse 101 peut comprendre de façon non limitative un laser solide, un laser à fibre, un laser semiconducteur, un laser disque ou une combinaison de tels lasers.

La source lumineuse peut émettre des impulsions laser avec une raie laser unique ou avec une pluralité de raies laser.

Plusieurs sources lumineuses peuvent également être prévues, par exemple à différentes longueurs d'onde pour l'émission de premières impulsions et d'au moins des deuxièmes impulsions à des longueurs d'onde différentes.

Le système 10 peut comprendre également au sein de l'enceinte 100 un module de mise en forme temporelle 102 et/ou un module de mise en forme spatiale 103, visant par exemple à réduire la cohérence temporelle et/ou spatiale des premières impulsions laser et/ou à former des impulsions avec un profil d'intensité sensiblement constant. Ces modules de mise en forme spatiale et/ou temporelle visent notamment à réduire des surintensités ou « points chauds » en entrée du dispositif fibré et à limiter les effets non linéaires. Des exemples de module de mise en forme temporelle et spatiale seront décrits dans la suite de la description.

Dans l'exemple représenté sur la FIG. 1, en sortie des modules de mise en forme temporelle 102 et spatiale 103, les premières impulsions laser sont injectées dans un dispositif fibré 110. Le dispositif fibré 110 permet le transport des impulsions laser émises par la ou lesdites sources lumineuses ; il peut comprendre une fibre multimode unique avec un cœur unique agencé pour recevoir lesdites impulsions laser. Dans d'autres exemples, il peut comprendre plusieurs fibres optiques, avec toujours une première fibre optique multimode comprenant un cœur unique adapté pour recevoir l'ensemble des impulsions laser.

Lorsque le système 10 est utilisé par exemple à des fins de grenaillage laser, il est possible de prévoir également pour la formation de la couche de confinement, une buse d'eau 14 alimentée par un réservoir d'eau et une pompe 12 délivrant de l'eau à la buse 14 au moyen d'un tuyau 13. L'eau n'est pas obligatoire et la couche de confinement peut tout aussi bien être obtenue grâce à un gel, une peinture ou un matériau solide transparent à la longueur d'onde des impulsions (par exemple du Quartz). Il est également possible de se passer de la couche de confinement mais cela réduit la profondeur des précontrainte induites par le processus de grenaillage laser. La couche de confinement n'est par ailleurs pas utile dans les applications autres que le grenaillage laser.

Le système 10 peut également comprendre des moyens de déplacement (non représentés) d'une extrémité distale du dispositif fibré. Lorsqu'on a besoin de générer des chocs laser à différents emplacements d'un matériau, par exemple dans différentes zones d'une surface dans le cas du traitement d'une surface, on peut déplacer le matériau ou déplacer l'extrémité distale du dispositif fibré, c'est-à-dire l'extrémité opposée à l'extrémité proximale placée du côté de la source et réaliser ainsi un balayage spatial de la surface à traiter par les impulsions laser.

Le système 10 peut comprendre également, selon un exemple de réalisation, un composant optique 115 pour la mise en forme spatiale des impulsions en sortie du dispositif fibré. Le composant optique 115 est par exemple un composant optique diffractif, par exemple de type DOE (pour « Diffractive Optic Element »), un système de microlentille, un condenseur optique, une lentille de Powel. Dans le cas d'un balayage spatial de la pièce à traiter par les impulsions laser, cette mise en forme peut permettre par exemple de s'adapter à la géométrie de la pièce à traiter pour minimiser le recouvrement entre les différentes zones de la pièce que l'on souhaite éclairer et ainsi gagner en rapidité.

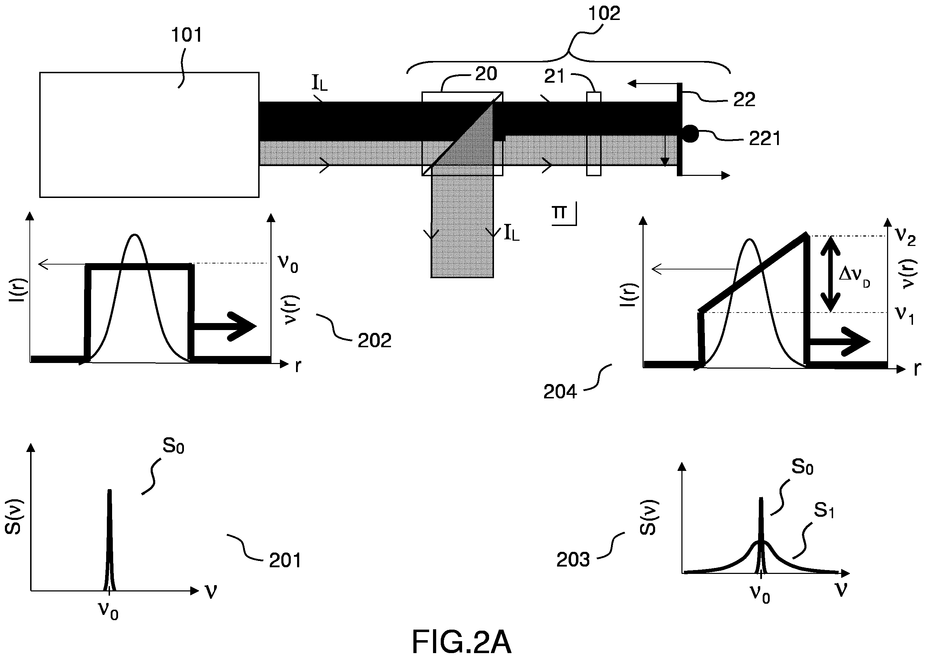

Les FIG. 2A - 2D d'une part et 3A - 3B d'autre part, illustrent différents moyens de mise en forme temporelle des impulsions en amont du transport par le dispositif fibré, dans un exemple de système de génération d'impulsions de forte puissance crête selon la présente description, visant à réduire la densité spectrale de puissance (DSP) des impulsions laser, soit en élargissant les raies laser, soit en multipliant les raies laser contenues dans les impulsions.

Une réduction de la DSP permet de limiter les effets non linéaires dans la ou les fibre(s) du dispositif fibré 110 et de réduire la cohérence temporelle des impulsions laser, ce qui permet de limiter les surintensités.

Par exemple, la déposant a montré qu'il pouvait être avantageux dans un système de génération d'impulsions laser de forte puissance crête selon la présente description, de réduire la DSP de telle sorte à se trouver, pour un diamètre de fibre donné et une longueur donnée du dispositif fibré, en-dessous du seuil de rétrodiffusion Brillouin stimulée dans le dispositif fibré.

En effet, sous l'effet de la température, les molécules qui constituent la fibre optique effectuent des petits déplacements autour de leur position d'origine. Cela entraîne l'apparition de phonons qui modifient l'indice de réfraction du cœur de la fibre, sous forme d'ondes acoustiques de faible amplitude. Lorsqu'une onde lumineuse traverse ce milieu, elle est diffusée par ces ondes acoustiques et la diffusion s'accompagne d'un effet Doppler du fait de la mobilité des ondes acoustiques (effet Brillouin spontané). Lorsque l'onde diffusée se propage dans le même sens que l'onde optique incidente on parle d'onde Stokes. Lorsque l'onde diffusée se propage dans un sens opposé à l'onde incidente, on parle d'onde anti-Stokes.

Lorsque l'onde incidente est très énergétique, en interférant avec l'onde Stokes, elle va créer une modulation d'intensité et un réseau d'indice très contrasté dans la fibre. Ce phénomène, appelé électrostriction, s'accompagne d'une diffusion stimulée qui a un gain exponentiel pour l'onde anti-Stokes ; on parle du Gain Brillouin Stimulé. L'onde stimulée est rétrodiffusée sous forme d'une onde contra-propagative entrainant ainsi des pertes énergétiques importantes pour l'onde transmise dans la fibre.

Le gain Brillouin stimulé n'apparait que pour une intensité lumineuse guidée dans la fibre supérieure à une intensité seuil appelée seuil Brillouin ($P_{th}$). Au-delà du seuil Brillouin, l'intensité de l'onde rétrodiffusée en sens inverse augment de façon exponentielle. Le seuil Brillouin est défini par (voir par exemple P. Singh et al. « nonlinear scattering effects in optical fibers", Progress In Electromagnetics Research, PIER 74, 379-405, 2007):

$$P_{th} = \frac{21.K.A_{eff}}{g_B.L_{eff}} \cdot \frac{\Delta \nu \otimes \Delta \nu_B}{\Delta \nu_B}$$

Où $A_{eff}$ est l'aire effective du cœur de la fibre, $L_{eff}$ est la longueur effective de la fibre, K est une constante liée à la polarisation des rayonnements transportée pouvant varier de 1 à 2 et $g_B$ est le gain Brillouin, $\Delta \nu$ est la largeur du spectre injecté des dites premières impulsions dans la fibre (étendue spectrale de la DSP) et $\Delta \nu_B$ est la largeur du gain Brillouin. Pour une onde monochromatique et à température ambiante, le gain Brillouin a une largeur de l'ordre de 20 MHz. Ainsi, si le spectre incident est décalé (ou élargi) sur plus de 20 MHz, l'effet Brillouin stimulé tend à diminuer. Autrement dit, plus les ondes lumineuses sont monochromatiques (avec une grande cohérence temporelle) plus l'effet Brillouin stimulé apparait facilement.

L'équation ci-dessus montre que pour des diamètres de cœur de fibres petits du dispositif fibré (ce qu'on recherche pour gagner en souplesse), le seuil Brillouin est abaissé. Pour augmenter le seuil Brillouin, on peut chercher par exemple à élargir le spectre de la ou des raie(s) laser contenues dans les impulsions laser injectées dans le dispositif fibré ou multiplier cette ou ces raie(s).

Les FIGS 2A à 2D illustrent des exemples de modules de mise en forme temporelle des premières impulsions laser adaptés permettant l'élargissement du spectre de la ou des raie(s) laser contenues dans lesdites premières impulsions.

L'élargissement spectral de la ou des raie(s) laser permet comme précédemment expliqué de diminuer les effets non linéaires dans la ou les fibres du dispositif fibré, notamment l'effet Brillouin stimulé, mais aussi de limiter le risque de surintensités dues à des phénomènes de speckle. En effet, si on élargit le spectre, on réduit la cohérence temporelle et la capacité de la lumière à interférer. Cela permet de réduire le contraste des grains de speckle et donc les surintensités.

Dans les exemples illustrés sur les FIGS 2A à 2D, le module de mise en forme temporelle 102 comprend un dispositif réfléchissant tournant autour d'un axe de rotation donné, configuré pour réfléchir lesdites premières impulsions incidentes avec un élargissement spectral de type Doppler.

Dans l'exemple illustré sur la FIG. 2A, le dispositif réfléchissant tournant comprend un simple miroir 22, agencé dans un plan perpendiculaire à un plan d'incidence Π des premières impulsions I_L. Le miroir 22 est tournant autour d'un axe de rotation 221 perpendiculaire au plan d'incidence Π et contenu dans le plan du miroir. Le miroir tournant peut présenter un mouvement de rotation ou d'oscillation autour de l'axe de rotation 221. Si l'on suppose que les impulsions sont émises avec une fréquence de répétition donnée, la vitesse de rotation ou d'oscillation du miroir est synchronisée pour que chaque impulsion soit incidente sur le miroir 22 avec le même angle d'incidence. Par exemple, l'angle d'incidence est de 0° par rapport à la normale au miroir, comme cela est représenté sur la FIG. 2A. l'angle d'incidence n'est pas nécessairement nul mais un angle nul est plus avantageux dans le cas d'un simple miroir.

Dans l'exemple de la FIG. 2A, un élément séparateur de polarisation 20 associé à une lame quart d'onde 21 permet de séparer d'une part les impulsions incidentes sur le miroir tournant 22 et d'autre part les impulsions réfléchies par le miroir 22.

Comme représenté que la FIG. 2A, les impulsions incidentes sur le miroir tournant 22 présentent par exemple un spectre $S_0$ centré sur une fréquence optique $\nu_0$ et avec une finesse spectrale donnée (courbe 201). Par ailleurs, la courbe 202 indique de façon schématique la répartition spatiale de l'intensité T(r) d'une impulsion incidente (trait fin) et la répartition spatiale de la fréquence optique v(r) (trait épais). Comme cela est visible sur la courbe 202, la répartition spatiale de la fréquence optique est constante, par exemple égale à $\nu_0$.

Lorsqu'une impulsion laser est incidente sur le miroir tournant 22, elle subit un décalage de fréquence Doppler $\Delta \upsilon_D$ variable avec le profil spatial du faisceau. En effet, spatialement, chaque point du faisceau incident sur le miroir tournant subit un décalage doppler induit par la vitesse angulaire du miroir δθ/δt. Or la vitesse angulaire varie en fonction de la distance r entre un point de miroir et l'axe de rotation.

La courbe 204 illustre ainsi de façon schématique la variation de la fréquence v(r) de l'impulsion réfléchie résultant du décalage de fréquence Doppler $\Delta v_D$ variable en fonction de r.

Notons $D_f$ le diamètre du faisceau incident sur le miroir en rotation. La partie haute du faisceau se trouvant à une distance $r=D_f/2$ subit un décalage Doppler négatif :

$$\Delta v_D \left(\frac{D_f}{2}\right) = v_0 - v_1,$$

où $v_0$ et $v_1$ sont respectivement les fréquences optiques du faisceau aux distances $r=0$ et $r=D_f/2$ de l'axe de rotation. La partie basse du faisceau se trouvant à la distance $r=-D_f/2$ subit un décalage Doppler positif :

$$\Delta v_D \left(\frac{-D_f}{2}\right) = v_2 - v_0,$$

où v2 est la fréquence optique du faisceau à la distance $r=-D_f/2$ de l'axe de rotation. Notons que le centre du faisceau se situant à une distance r=0 de l'axe de rotation subit un décalage Doppler nul.

Dans le cas du miroir tournant représenté sur la FIG. 2A, on peut montrer que l'amplitude total du de l'élargissement Doppler $\Delta v_D$ est maximisé lorsque $D_f \sim D_M$ ($D_M$ diamètre du miroir). Dans ce cas l'amplitude du décalage Doppler est égal à égal à :

$$\Delta v_D = \Delta v_D \left(\frac{D_f}{2}\right) - \Delta v_D \left(\frac{-D_f}{2}\right) = \frac{2\pi D_M}{\lambda} \cdot \frac{\delta\theta}{60}$$

$\delta\theta$ vitesse de rotation ou d'oscillation en RPM (1 RPM = $2\pi$ rad/min = $2\pi/60$ rad/s) , $\lambda$ longueur d'onde. On suppose dans cet exemple. $\Delta v_D \left(\frac{D_f}{2}\right)$ et $\Delta v_D \left(-\frac{D_f}{2}\right)$ correspondent aux décalages Doppler subit à chaque extrémité du miroir.

Ainsi, il est possible d'associer à chaque cordonnée spatiale r du faisceau une fréquence optique résultante qui lui est propre. Cet effet Doppler variable spatialement entraîne un élargissement spectral de la raie laser des impulsions (spectre $S_3$), comme illustré sur la courbe 203.

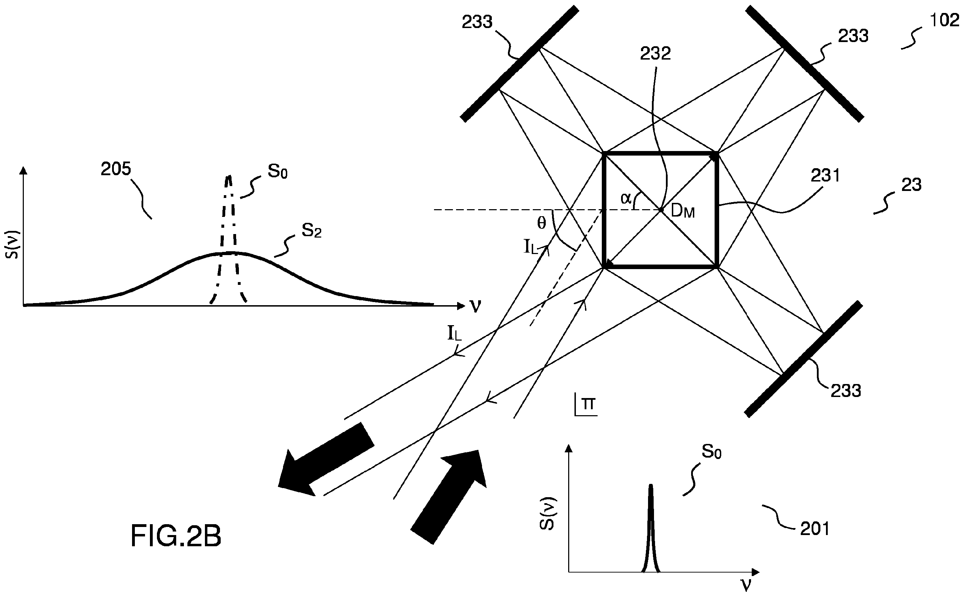

Les FIGS 2B à 2D illustrent d'autres exemples de dispositifs réfléchissants en rotation. Dans ces exemples, le dispositif réfléchissant tournant comprend plusieurs surfaces réfléchissantes agencées par exemple selon les faces d'un polygone. Le dispositif réfléchissant tournant comprend en outre des miroirs fixes de renvoi des impulsions laser permettant de renvoyer chaque impulsion d'une première surface réfléchissante en rotation à la suivante. Les surfaces réfléchissantes et les miroirs de renvoi sont par exemple agencés dans des plans perpendiculaires à un plan d'incidence $\Pi$ comprenant les directions des vecteurs d'onde des impulsions incidentes et réfléchies, pour rendre maximal l'effet de décalage Doppler. Les surfaces réfléchissantes présentent un mouvement de rotation ou d'oscillation autour d'un axe de rotation central, perpendiculaire au plan d'incidence, par exemple un axe passant par le barycentre du polygone, dans cet exemple un axe de symétrie du polygone. Dans les exemples présentés ci-dessous, chaque face du polygone tournant forme une surface réfléchissante ; ainsi, le dispositif réfléchissant tournant comprend N surfaces réfléchissantes et N-1 miroirs de renvoi. Il est possible d'avoir également N surfaces réfléchissantes (N≥2) sur un nombre limité de côtés du polygone et toujours N-1 miroirs de renvoi. La déposante a montré que cette configuration particulière de « polygone tournant » permettait de multiplier l'élargissement Doppler.

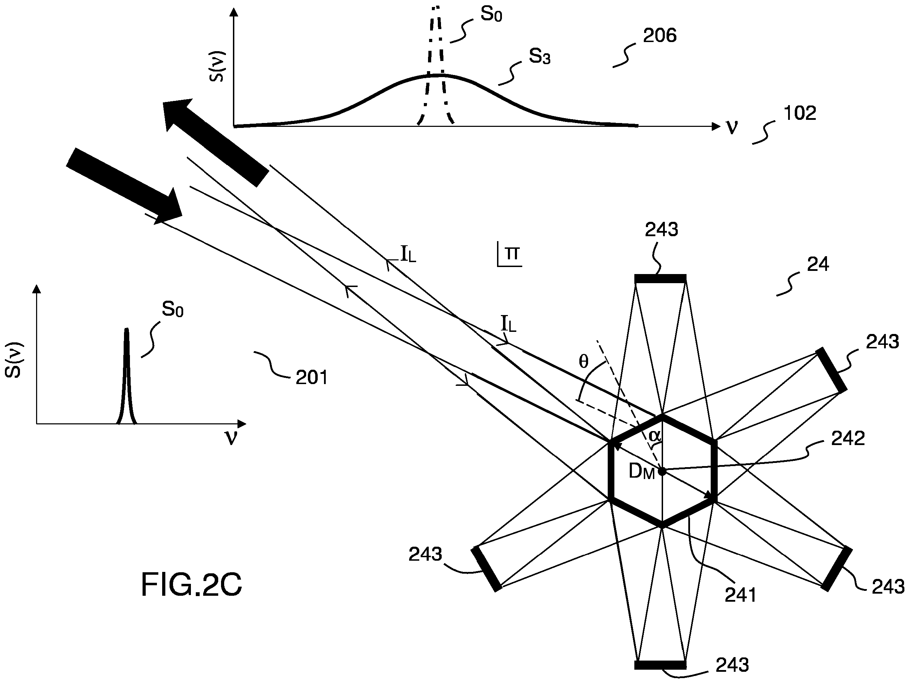

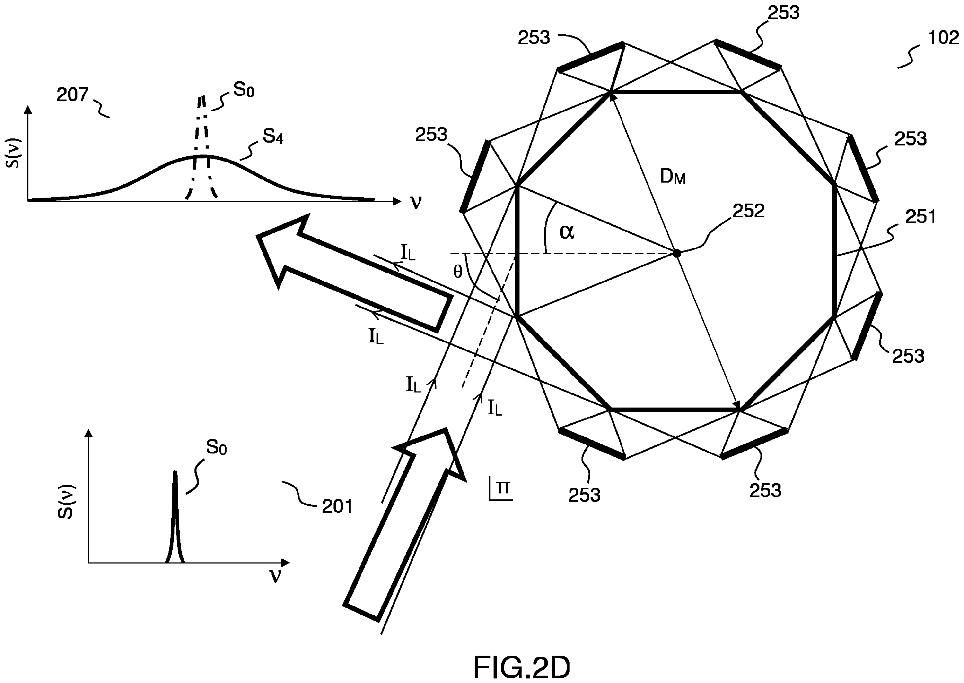

Dans l'exemple de la FIG. 2B, le dispositif réfléchissant tournant 23 comprend 4 surfaces réfléchissantes 231 agencées en carré, en rotation autour d'un axe de symétrie 232 et 3 miroirs de renvoi 233 ; Dans l'exemple de la FIG. 2C, le dispositif réfléchissant tournant 24 comprend 6 surfaces réfléchissantes 241 agencées selon un hexagone, en rotation autour d'un axe de symétrie 242, et 5 miroirs de renvoi 243; Dans l'exemple de la FIG. 2D, le dispositif réfléchissant tournant 25 comprend 8 surfaces réfléchissantes 251 agencées en octogone, en rotation autour d'un axe de symétrie 252, et 7 miroirs de renvoi 253. De façon générale, le dispositif réfléchissant tournant pourra comprendre N surfaces réfléchissantes, avec N compris entre 2 et 10 et N-1 miroirs de renvoi. Dans les exemples illustrés sur les FIGS 2B à 2D, on note respectivement $S_4$, $S_5$, $S_6$ les spectres résultants (courbes 205, 206, 207 respectivement).

Comme illustré sur les FIGS 2B - 2D, les impulsions laser $I_L$ sont incidentes sur une surface réfléchissante du polygone avec un angle $\theta$ par rapport à la normale à la surface. Les impulsions lasers sont synchronisés temporellement avec la rotation ou l'oscillation du dispositif réfléchissant tournant de telle sorte que chaque impulsion incidente présente le même angle d'incidence avec l'une des surfaces réfléchissantes.

Afin de rendre maximal l'étalement spectral par effet Doppler, on peut prévoir que le faisceau lumineux formé des impulsions laser incident sur chaque surface réfléchissante présente un diamètre inférieur ou égale à :

$$D_f = D_M . \sin(\alpha) . \cos(\theta)$$

Où $D_M$ est un diamètre externe du polygone dans une direction perpendiculaire à l'axe de rotation et $\alpha$ est le demi angle entre le centre du polygone et une de ces facettes Le dispositif réfléchissant tournant présente une vitesse angulaire $\delta\theta$ , $\theta$ est l'angle d'incidence du faisceau par rapport à la normal à une facette réfléchissante. Chaque facette en rotation va décaler par effet Doppler la fréquence du rayonnement qui s'y réfléchit. Comme dans l'exemple de la FIG. 2A, le décalage Doppler subi par le faisceau est différent suivant le profil spatial du faisceau. En effet, spatialement, chaque point du faisceau incident sur une face réfléchissante subi un décalage Doppler induit par la vitesse angulaire de la face réfléchissante. Dans le cas ou faisceau arrive dans une direction perpendiculaire à l'axe de rotation, l'amplitude total de l'élargissement Doppler peut être maximisé. Il est alors déterminé par l'expression ci-dessous :

$$\Delta v_D = \Delta v_D \left(\frac{D_f}{2}\right) - \Delta v_D \left(\frac{-D_f}{2}\right) = \frac{2\pi D_M}{\lambda} . \sin(\alpha) \cos(\theta) \frac{\delta\theta}{60}$$

Grâce à la géométrie de polygone du dispositif réfléchissant tournant, les impulsions lumineuses peuvent se réfléchir sur chacune des faces réfléchissantes du polygone et il est possible de multiplier l'effet d'étalement spectral par effet Doppler. Ainsi, pour un polygone présentant N faces réfléchissantes, le spectre d'une raie incidente sur le dispositif réfléchissant tournant subira un élargissement dû à l'effet Doppler s'exprimant de la façon suivante :

$$\Delta v_D = \frac{N . 2\pi D_M}{\lambda} . \sin(\alpha) \cos(\theta) \frac{\delta\theta}{60}$$

Par exemple, on considère des impulsions laser à 1064 nm présentant une durée d'impulsion de 20 ns et dont le spectre est limité par transformée de Fourier (largeur spectrale 50 MHz). Si le pulse laser est synchronisé temporellement avec un octogone en rotation à 55 000 rpm (rpm = rotation par minute soit 5760 rad/s) présentant un diamètre extérieur de 40 mm de façon à ce que l'angle d'incidence entre le faisceau laser et la normal à la surface aux polygones soit toujours égale à $\theta$ =11.25° et les impulsions de réfléchissent sur les 8 faces réfléchissantes du polygone alors le spectre du laser sera étalé sur environ 690 MHz. Le dispositif réfléchissant tournant aura ainsi permis d'élargir le spectre incident d'un facteur 13.

Par ailleurs, en plus d'étaler le spectre et de réduire la cohérence temporelle des impulsions laser, les différentes coordonnées spatiales du faisceau se trouvent associées à différentes composantes spectrales, ce qui permet de réduire la cohérence spatiale. Un tel module de mise en forme temporel permet donc ainsi de minimiser les pics de surintensités dus à la cohérence spatio-temporelle de la source. De plus, pour un faisceau à 1064 nm de 20 ns et de diamètre 15 mm, la limite de diffraction est autour de 67 μrad. Or pendant la durée de l'impulsion, si le polygone de 8 facettes tournant à 55000 RPM (5760 rad/s), le faisceau subit un balayage pendant sa durée de 20 ns égale à 115 μrad, soit environ 2 fois la limite de diffraction. Cela contribuera à minimiser le contraste du speckle.

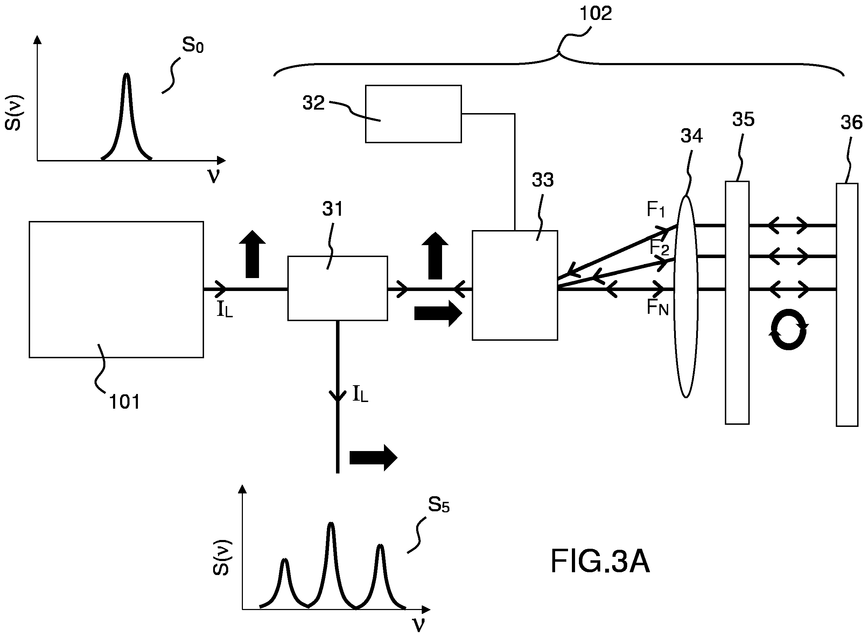

Les FIGS. 3A - 3B illustrent des exemples de module 102 de mise en forme temporelle visant à multiplier la ou les raie(s) laser des impulsions laser injectées dans le dispositif fibré.

Ces exemples permettent une multiplication des raies laser conduisant à une diminution de la cohérence temporelle. Cela permet notamment d'augmenter le seuil Brillouin et diminuer le contraste du speckle en entrée du dispositif fibré.

L'exemple de la FIG. 3A est basé sur l'utilisation d'un modulateur acousto-optique 33 (MAO, ou AOM selon l'abréviation de l'expression anglo-saxonne « acousto-optic modulator »), utilisant l'effet acousto-optique pour diffracter et changer la fréquence optique de la lumière par ondes sonores (généralement proche des fréquences radio).

Plus précisément, le module 102 comprend un cube séparateur de polarisation 31 qui transmet les impulsions laser $I_L$ polarisées linéairement, de spectre $S_0$, vers le modulateur acousto-optique 33. Le modulateur 33 reçoit un signal issu d'un générateur électrique radiofréquence polychromatique 32. Des faisceaux diffractés $F_1$, $F_2$, ... sont issus du modulateur 33. Si N radio fréquences constituent le signal RF polychromatique délivré par le générateur 32 et alimentant le modulateur acousto-optique 33, il est possible d'avoir jusqu'à N faisceaux diffractés dans N directions différentes en sortie du modulateur 33. Chaque faisceau diffracté est associé à une direction et a subi un décalage spectral correspondant à l'une des N radiofréquences constituant le signal RF polychromatique délivré par le générateur 32. Plus la fréquence RF est importante plus le décalage spectral et angulaire subi par le faisceau en sortie du modulateur 33 est important. Ainsi, un éventail de faisceaux discrets sont émis en sortie du modulateur 33. Cet éventail de faisceaux discrets peut être recollimaté par un système optique 34, par exemple une lentille optique. Les faisceaux ainsi collimatés passent à travers une lame quart d'onde 34 qui transforme la polarisation linéaire en une polarisation circulaire. Un miroir 36 est disposé en sortie de la lame quart d'onde pour former une configuration d'auto-collimation. Cette configuration optique permet un retour inverse des faisceaux vers le modulateur 33. Les impulsions retour retraversent la lame 35. Elles ont alors une polarisation à 90° de la polarisation initiale. En suivant le chemin inverse, elles traversent de nouveau la lentille 34 pour être acheminées dans le modulateur 33. Les faisceaux subiront à nouveau des décalages angulaires et spectraux, le décalage spectral au retour s'ajoutant au décalage spectral subi à l'aller. Chacun des faisceaux décalés spectralement est renvoyé vers le cube séparateur de polarisation 31 et dirigé vers le dispositif fibré (non représenté sur la FIG. 3A). Le spectre résultant Si est élargi, comme illustré sur le schéma de la FIG. 3A du fait des différentes raies formées par le module 102 ainsi représenté.

Par exemple, si le signal polychromatique radiofréquence comprend 3 radiofréquences distinctes $\nu_1$, $\nu_2$, $\nu_3$, comprises typiquement entre 35 MHz et 350 MHz, le spectre $S_1$ des impulsions de sortie comprendra un peigne de fréquences optiques $\nu_0 + 2\nu_1$, $\nu_0 + 2\nu_2$, $\nu_0 + 2\nu_3$, où $\nu_0$ est la fréquence optique centrale des impulsions émises par la source 101. Par contre le faisceau en sortie présentera une direction unique. Si les impulsions laser issues de la source 101 comprennent déjà une pluralité de raies, ces raies seront chacune multipliées comme décrit précédemment. Notons que la bande passante des amplificateurs optiques envisagés est largement supérieure aux décalages réalisés par les MAOs, les impulsions laser résultant de cette mise en forme temporelle pourront être amplifiées par l'amplificateur optique. Par exemple, un cristal de Nd :YAG possède une bande passante d'amplification de près de 30 GHz autour de 1064 nm.

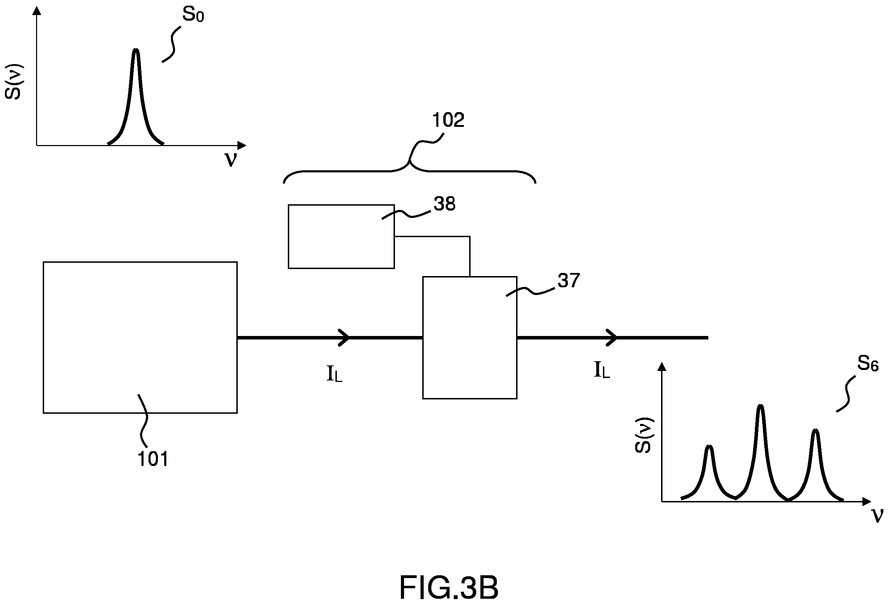

Un autre montage permettant de multiplier les raies des premières impulsions laser est illustré sur la FIG. 3B.

Dans cet exemple, le module de mise en forme temporelle comprend un modulateur d'amplitude ou de phase 37 configuré pour moduler les impulsions incidentes $I_L$ en intensité. Le modulateur d'amplitude ou de phase 37 comprend par exemple une cellule de Pockels. Si l'intensité est modulée avec un signal radiofréquence polychromatique 38, le spectre $S_2$ en sortie de module sera enrichi des composantes spectrales issues du signal RF polychromatique 38. Ceci a pour effet d'élargir le spectre en multipliant les raies laser et la densité spectrale de puissance des impulsions issues de la source 101.

La réduction de la DSP résultant de la multiplication des raies laser comme décrite dans les exemples ci-dessus peut aller d'un facteur 2 à un facteur 10. Ainsi, par exemple, on peut à partir d'un spectre fin de largeur spectrale 100 MHz typiquement, obtenir des impulsions dont la largeur spectrale totale en entrée du dispositif fibré est de l'ordre de plusieurs centaines de MHz, ce qui permet de diminuer significativement le gain Brillouin.

Bien entendu, les méthodes présentées ci-dessus pour la réduction de la DSP ne sont pas exhaustives et peuvent être combinées.

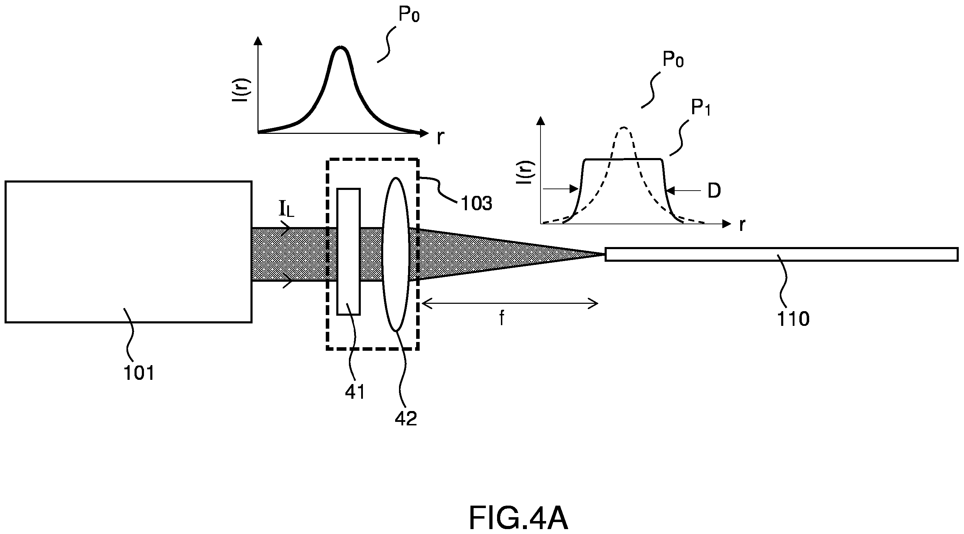

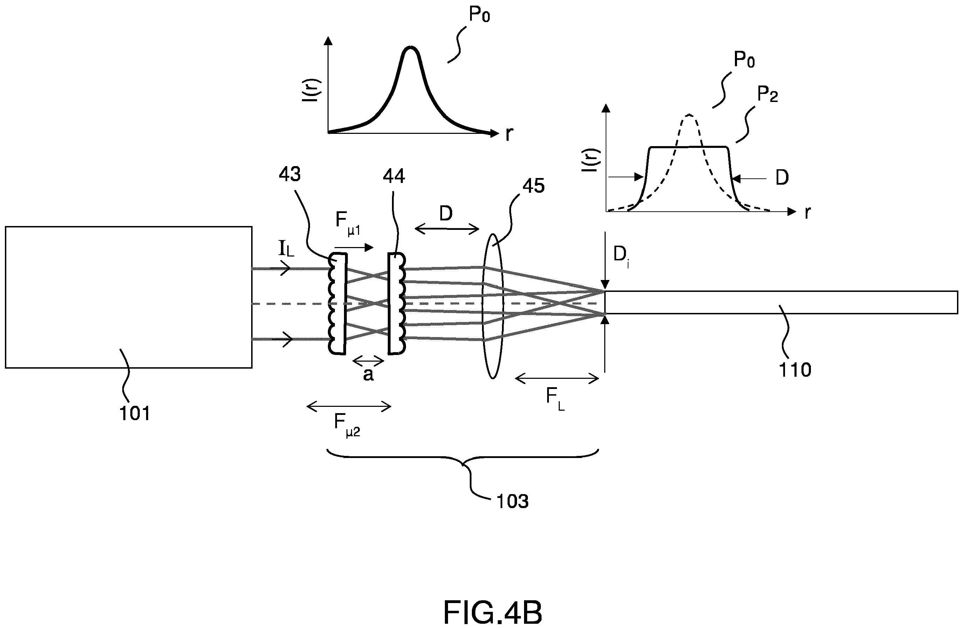

Les FIG. 4A et 4B illustrent des exemples de mise en forme spatiale des impulsions laser $I_L$ en amont du transport par le dispositif fibré.

Ces deux exemples visent à former un faisceau de profil d'intensité sensiblement uniforme, de type « top hat ». Par exemple, on pourra rechercher une variation spatiale de l'intensité lumineuse est de +/- 10% hors effets granulaires liés au speckle.

La FIG. 4A illustre ainsi un premier exemple de module de mise en forme 103 comprenant un DOE (pour « Diffractif Optical Element ») 41 associé à un système optique 42, par exemple une lentille optique, pour réaliser une mise en forme spatiale adaptée à la taille et à la géométrie de la fibre.

Sur la FIG. 4A, le profil $P_0$ représente le profil de l'intensité des impulsions laser émises par une source laser, par exemple de type gaussien. La déposante a montré qu'avec un profil $P_1$ de type « top hat », comme montré sur la FIG. 4A, on diminue le risque de surintensités lors de la propagation dans le dispositif fibré. La mise en forme spatiale du faisceau dans le plan image du système optique 42 correspond à la transformée de Fourier spatiale du masque de phase imposé par le DOE 41 convoluée avec la transformée de Fourier spatiale de la répartition spatiale d'intensité du faisceau au niveau du DOE. Ainsi, le masque de phase imposé par le DOE 41 est calculé de telle sorte que le résultat de cette convolution forme une répartition d'intensité « top hat », le diamètre D du faisceau étant proportionnel à la distance focale f du système optique 42.

La FIG. 4B illustre une autre variante d'un module de mise en forme spatiale 103. Dans cet exemple, la mise en forme spatiale est réalisée au moyen d'une paire de matrices de microlentilles 43, 44 et d'une lentille convergente 44.

La première matrice de microlentilles 43 (distance focal $F_{\mu 1}$) divise le faisceau incident en une multitude de sous-faisceaux. La seconde matrice de microlentilles 44 (distance focale $F_{\mu 2}$) en combinaison avec la lentille convergente 45 joue le rôle d'une matrice d'objectifs qui superpose les images de chacun des sous faisceaux dans un plan dit « plan d'homogénéisation » situé à la distance focale $F_L$ de la lentille convergente. En modifiant la distance entre les deux matrices de microlentilles, la taille de la mise en forme est changée. La géométrie des microlentilles prises individuellement donne la forme de l'image après le plan d'homogénéisation.

Une mise en forme spatiale telle que décrite au moyen des FIGS 4A, 4B permet par comparaison à un profil gaussien de réduire les surintensités en entrée de la fibre multimode lors de la propagation dans le dispositif fibré. En effet, pour une même énergie et un même diamètre de faisceau, un profil circulaire « top hat » présente une intensité crête inférieure à un profil gaussien.

La diminution des surintensités sur le profil de puissance des impulsions laser peut également être obtenue en réduisant la cohérence temporelle des impulsions, comme expliqué précédemment.

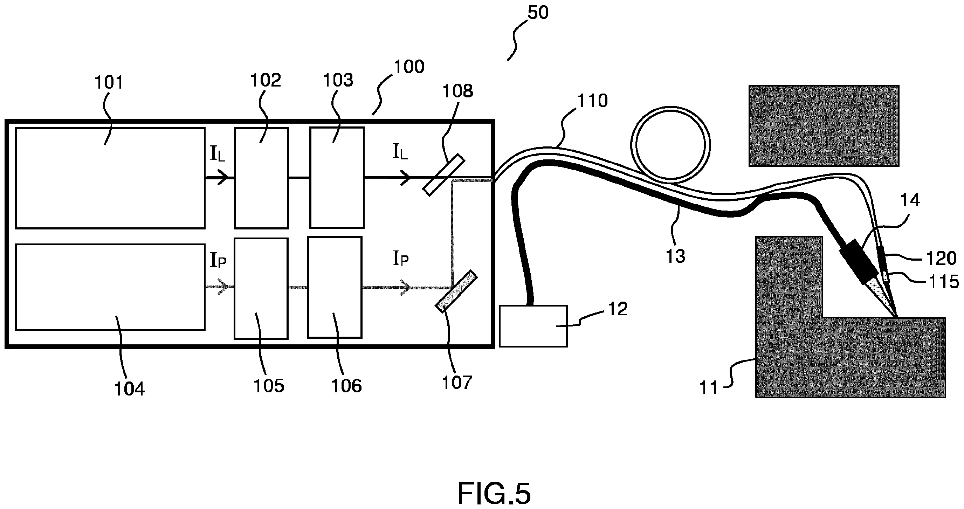

La FIG. 5 illustre un exemple de système 50 selon la présente description comprenant tout ou partie des éléments décrits en référence à la FIG. 1 et comprenant en outre au moins un premier amplificateur optique 120 agencé en sortie dudit dispositif fibré 110 pour l'amplification optique desdites premières impulsions laser. Eventuellement, plusieurs amplificateurs optiques peuvent être agencés en série. En sortie du ou desdits amplificateur(s) optique(s), une mise en forme spatiale des impulsions amplifiées est possible au moyen d'un élément 115, comme décrit en référence à la FIG. 1.

Le système 50 peut comprendre aussi au moins un deuxième amplificateur laser pour l'amplification de deuxièmes impulsions laser émises par une deuxième source à une longueur d'onde différente de la première source, le cas échéant.

Le système 50 comprend également une source lumineuse 104 pour l'émission d'un faisceau de pompe $I_P$. La longueur d'onde de la source lumineuse de pompe 104 dépend de la longueur d'onde des impulsions émises par la source 101 et de l'amplificateur optique 120 utilisé. Par exemple, si la source laser 101 émet à une longueur d'onde autour de 1064 nm et que le cristal amplificateur de l'amplificateur optique 120 est un cristal de Nd :YAG, la source de pompe 104 pourra émettre des faisceaux de pompe à une longueur d'onde autour de 800 nm. Si le source laser 101 émet à une longueur d'onde autour de 1030 nm, et que le cristal amplificateur est de type Yb : YAG, alors la source de pompe 104 pourra émettre les faisceaux de pompe à une longueur d'onde autour de 980 nm.

La source laser de pompe comprend avantageusement une ou plusieurs diodes laser.

La source laser de pompe 104 peut émettre des faisceaux de pompe en régime continu (CW) ou quasi continu (QCW).

Une mise en forme temporelle au moyen d'un module de mise en forme temporelle 105 permet par exemple de moduler les faisceaux de pompe en intensité. Ainsi par exemple, les faisceaux de pompe sont modulés à la fréquence de répétition des dites premières impulsions. Ils peuvent être maintenus à une intensité lumineuse constante ou quasi-constante pendant une durée donnée, par exemple de l'ordre du temps des niveaux excités des ions terres rares qui servent au phénomène d'amplification de l'amplificateur optique 120. Une fois cette durée passée, l'intensité des faisceaux de pompe peut être réduite à zéro. Une mise en forme spatiale des faisceaux de pompe est également possible, par exemple au moyen d'un module de mise en forme spatiale 106, qui permet par exemple de sécuriser l'injection des faisceaux de pompe dans le dispositif fibré 110 en adaptant la taille du mode optique du faisceau de pompe au diamètre de cœur de la première fibre multimode.

Dans le cas d'utilisation de diodes laser de pompe, la mise en forme temporelle est faite an agissant directement sur la commande électrique de la diode.

Dans l'exemple de la FIG.5, le faisceau de pompe $I_P$ est injecté dans le dispositif fibré 110 avec les impulsions laser $I_L$ au moyen de miroirs 107, 108, la lame 108 étant par exemple une lame dichroïque. Le faisceau de pompe $I_P$ est copropagatif avec les impulsions laser $I_L$, c'est-à-dire que le faisceau de pompe est injecté dans le dispositif fibré 110. Un pompage copropagatif est particulièrement avantageux afin de maximiser le recouvrement entre le faisceau laser de pompe et les impulsions laser à amplifier. Ainsi le processus d'amplification est plus efficace et permet d'optimiser l'énergie de pompe nécessaire.

Alternativement, le pompage optique peut être transverse, effectué par exemple au moyen de diodes laser individuelles fibrées. Cette variante permet d'amener plus d'énergie de pompe en utilisant, par exemple, une fibre optique par diode de pompe.

Dans tous les cas, comme précédemment décrit, une mise en forme spatiale des impulsions en sortie de l'amplificateur 120 est possible, par exemple au moyen d'un composant 115 tel que décrit en référence à la FIG. 1, par exemple un composant optique diffractif, par exemple de type DOE (pour « Diffractive Optic Element »), un système de microlentille, un condenseur optique, une lentille de Powel.

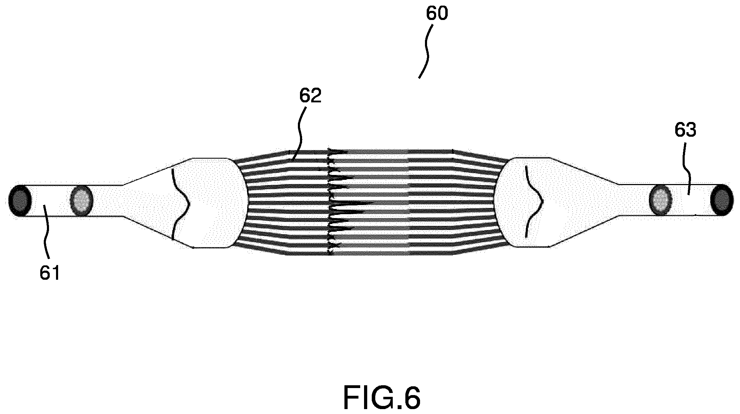

La FIG. 6 représente un schéma d'un exemple de réalisation d'un dispositif fibré 60 dans lequel sont agencés tête bêche deux composants connus sous le terme de « lanterne photonique ».

Chaque composant ou « lanterne photonique » connecte un cœur de fibre multimode (au moins 20 000 modes) à plusieurs fibres légèrement multimodes (moins de 10 000 modes) ayant des cœurs de plus petits diamètres. L'agencement de ces composants est par exemple décrit dans l'article de D. Noordegraaf. et al. ("Multi-mode to single mode conversion in a 61 port photonic lantern", Optics Express, Vol. 18, No. 5 (2010) pp. 4673 - 4678.). Ainsi, le dispositif fibré 60 décrit sur la FIG. 6 comprend en entrée ladite première fibre multimode 61, un ensemble de fibres légèrement multimodes 62 couplés avec la dite première fibre multimode, et en sortie, une deuxième fibre multimode 63, couplée avec lesdites fibres légèrement multimodes et comprenant un cœur unique pour la sortie desdites premières impulsions laser. Il peut y avoir par exemple entre 10 et 20, avantageusement entre 10 et 100 fibres légèrement multimodes.

Un tel dispositif peut présenter des pertes en transmission, typiquement inférieures à 15%, mais présente une très grande souplesse du fait de l'utilisation des fibres légèrement multimodes de plus petit diamètre (typiquement entre 50 $\mu$m et 200 $\mu$m). Par ailleurs, les pertes peuvent être compensées en utilisant des fibres 62 dopées entre les tronçons mono-cœur d'injection et de couplage (61, 63). Ces pertes pourront également être compensées, selon une variante, grâce à un amplificateur optique en sortie du dispositif fibré.

Ainsi, il est possible au moyen du dispositif fibré 60 d'injecter des impulsions laser de haute énergie (typiquement > 300 mJ pour des pulses de 10 ns) dans un cœur unique et de propager lesdites impulsions jusqu'à la zone à traiter sur plusieurs fibres de plus petit diamètre. Une fois la fonction de transport multifibres réalisé, le rayonnement optique peut être amplifié, par exemple au moyen de l'amplificateur optique 120 tel que décrit sur la FIG. 5, puis délivré sur la surface à traiter. En délivrant l'énergie à partir d'un cœur unique, l'amplification et/ou la mise en forme du faisceau par un composant d'optique diffractif par exemple de type DOE, système de microlentille, condenseur optique, lentille de Powel, est facilitée.

Par ailleurs, le fait que l'entrée et les sorties du dispositif fibré soient des fibres multimodes avec des cœurs de diamètres importants (typiquement entre 300 $\mu$m et 1 mm) sécurise la sensibilité aux endommagements induits par laser pour les faces d'entrée et sortie du dispositif fibré.

Bien que décrite à travers un certain nombre d'exemples de réalisation détaillés, les procédés et systèmes de génération d'impulsion de forte puissance crête comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Système (10) de génération d'impulsions laser de forte puissance crête comprenant :

    - au moins une première source lumineuse (101) pour l'émission de premières impulsions laser ($I_L$) comprenant une ou plusieurs raie(s) laser;
    - un dispositif fibré (110) pour le transport desdites premières impulsions laser, comprenant au moins une première fibre multimode avec un cœur unique agencé pour recevoir lesdites premières impulsions laser;
    - un module (102) de mise en forme temporelle desdites premières impulsions laser, agencé en amont du dispositif fibré, configuré pour diminuer la densité spectrale de puissance desdites premières impulsions laser par réduction de la cohérence temporelle ; le système de génération d'impulsions laser étant **caractérisé en ce que** :
    - lesdites premières impulsions laser ($I_L$) sont des impulsions laser nanosecondes, et
    - ledit module de mise en forme temporelle comprend un dispositif réfléchissant tournant (22 - 25) autour d'un axe de rotation donné, configuré pour réfléchir lesdites premières impulsions laser ($I_L$) avec un élargissement spectral de type Doppler.

2. Système de génération d'impulsions laser selon la revendication 1, dans lequel ledit dispositif réfléchissant tournant comprend au moins une première surface réfléchissante présentant un mouvement de rotation ou d'oscillation autour dudit axe de rotation.

3. Système de génération d'impulsions laser selon la revendication 2, dans lequel lesdites premières impulsions laser étant émises avec une fréquence de répétition donnée, la vitesse de rotation ou d'oscillation de ladite au moins une surface réfléchissante est synchronisée avec ladite fréquence de répétition des premières impulsions laser de telle sorte que chacune desdites premières impulsions laser soit incidente sur ladite au moins une surface réfléchissante avec un angle d'incidence constant.

4. Système de génération d'impulsions laser selon l'une quelconque des revendications 2 ou 3, dans lequel ledit dispositif réfléchissant tournant comprend N surfaces réfléchissantes (N $\geq$ 2) et N - 1 miroirs de renvoi configurés pour renvoyer chacune desdites premières impulsions laser sur chacune desdites surfaces réfléchissantes, l'ensemble desdites surfaces réfléchissantes présentant un mouvement de rotation ou d'oscillation autour dudit axe de rotation.

5. Système de génération d'impulsions laser selon l'une quelconque des revendications précédentes, dans lequel ledit module (102) de mise en forme temporelle comprend en outre des moyens configurés pour multiplier la ou les raie(s) laser contenues dans lesdites premières impulsions laser.

**6.** Système de génération d'impulsions laser selon l'une quelconque des revendications précédentes, comprenant en outre un module (103) de mise en forme spatiale desdites premières impulsions laser, agencé en amont du dispositif fibré, configuré pour uniformiser la densité spatiale de puissance desdites impulsions.

**7.** Système de génération d'impulsions laser selon l'une quelconque des revendications précédentes, comprenant en outre au moins un premier amplificateur optique (120) agencé en sortie dudit dispositif fibré pour l'amplification optique desdites premières impulsions laser.

**8.** Système de génération d'impulsions laser selon l'une quelconque des revendications précédentes, dans lequel ledit dispositif fibré (110) comprend en entrée ladite première fibre multimode, un ensemble de fibres légèrement multimodes, c'est-à-dire un ensemble de fibres comprenant chacune moins de 10 000 modes, couplées avec la dite première fibre multimode, et en sortie, une deuxième fibre multimode, couplée avec lesdites fibres légèrement multimodes et comprenant un cœur unique pour la sortie desdites premières impulsions laser.

**9.** Système de génération d'impulsions laser selon l'une quelconque des revendications précédentes, dans lequel ledit dispositif fibré (110) comprend au moins une fibre dopée pour la pré-amplification optique desdites premières impulsions laser.

**10.** Procédé de génération d'impulsions laser de forte puissance crête comprenant :

- l'émission de premières impulsions laser ($I_L$) nanosecondes;
- le transport desdites premières impulsions laser ($I_L$) par un dispositif fibré (110) comprenant au moins une première fibre multimode avec un cœur unique dans lequel sont injectées lesdites premières impulsions laser;
- la mise en forme temporelle desdites premières impulsions laser en amont du transport par le dispositif fibré, ladite mise en forme temporelle comprenant la réduction de la densité spectrale de puissance par réduction de la cohérence temporelle desdites premières impulsions laser au moyen d'un dispositif réfléchissant tournant (22 - 25) autour d'un axe de rotation (221, 232, 242, 252) donné, configuré pour réfléchir lesdites premières impulsions incidentes avec un élargissement spectral de type Doppler.

**11.** Procédé de génération d'impulsions laser selon la revendication 10, comprenant en outre la mise en forme spatiale desdites premières impulsions laser en amont du transport par le dispositif fibré, ladite mise en forme spatiale comprenant l'uniformisation de la densité spatiale de puissance desdites premières impulsions laser.

**12.** Procédé de génération d'impulsions laser selon l'une quelconque des revendications 10 ou 11, comprenant en outre l'amplification optique desdites premières impulsions laser au moyen d'au moins un premier amplificateur optique agencé en sortie du dispositif fibré pour former lesdites impulsions laser de forte puissance crête.

**Patentansprüche**

**1.** System (10) zur Erzeugung von Laserpulsen mit hoher Spitzenleistung, aufweisend:

- mindestens eine erste Lichtquelle (101) zur Emission von ersten Laserpulsen ($I_L$), die eine oder mehrere Laserlinien aufweisen;
- eine Faservorrichtung (110) zum Transport der ersten Laserpulse, aufweisend mindestens eine erste Multimode-Faser mit einem einzelnen Kern, der so angeordnet ist, dass er die ersten Laserpulse einleitet;
- ein Modul (102) zur zeitlichen Formung der ersten Laserpulse, welches der Faservorrichtung vorgeschaltet und derart ausgebildet ist, dass es die spektrale Leistungsdichte der ersten Laserpulse durch Reduzierung der zeitlichen Kohärenz verringert; wobei das System zur Erzeugung von Laserpulsen **dadurch gekennzeichnet ist, dass**:

- die ersten Laserpulse ($I_L$) Nanosekunden-Laserpulse sind, und
- das Modul zur zeitlichen Formung eine reflektierende Drehvorrichtung (22 - 25) aufweist, die um eine vorgegebene Rotationsachse rotiert und derart ausgebildet ist, dass sie die ersten Laserpulse ($I_L$) mit einer Spektralverbreiterung vom Typ Doppler reflektiert.

**2.** System zur Erzeugung von Laserpulsen nach Anspruch 1, wobei die reflektierende Drehvorrichtung mindestens eine erste reflektierende Oberfläche aufweist, die eine rotierende oder oszillierende Bewegung um die Rotationsachse ausführt.

**3.** System zur Erzeugung von Laserpulsen nach Anspruch 2, wobei die ersten Laserpulse mit einer vorgegebenen Wiederholungsfrequenz ausgesendet werden, wobei die Rotationsgeschwindigkeit oder die Oszillationsgeschwindigkeit der mindestens einen reflektierenden Oberfläche mit der Wiederholungsfrequenz der ersten Laserpulse synchronisiert ist, so dass jeder der ersten Laserpulse mit einem konstanten Einfallswinkel auf die mindestens eine reflektierende Oberfläche auftrifft.

**4.** System zur Erzeugung von Laserpulsen nach Anspruch 2 oder 3, wobei die reflektierende Drehvorrichtung N reflektierende Oberflächen (N ≥ 2) und N - 1 Umlenkspiegel aufweist, die derart ausgebildet sind, dass sie jeden der ersten Laserpulse auf jede der reflektierenden Oberflächen umlenken, wobei alle reflektierenden Oberflächen eine Rotationsbewegung oder eine Oszillationsbewegung um die Rotationsachse ausführen.

**5.** System zur Erzeugung von Laserpulsen nach einem der vorhergehenden Ansprüche, wobei das Modul (102) zur zeitlichen Formung zusätzlich Mittel aufweist, die derart ausgebildet sind, dass sie die in den ersten Laserpulsen enthaltene(n) Laserlinie(n) vervielfachen.

**6.** System zur Erzeugung von Laserpulsen nach einem der vorhergehenden Ansprüche, aufweisend ferner ein Modul (103) zur räumlichen Formung der ersten Laserpulse, welches der Faservorrichtung vorgeschaltet und derart ausgebildet ist, dass es die räumliche Dichte der Spitzenleistung der Pulse vereinheitlicht.

**7.** System zur Erzeugung von Laserpulsen nach einem der vorhergehenden Ansprüche, aufweisend ferner mindestens einen ersten optischen Verstärker (120), der am Ausgang der Faservorrichtung zur optischen Verstärkung der ersten Laserpulse angeordnet ist.

**8.** System zur Erzeugung von Laserpulsen nach einem der vorhergehenden Ansprüche, wobei die Faservorrichtung (110) am Eingang die erste Multimode-Faser, einen Satz von leichten Multimode-Fasern, d.h. einen Satz von Fasern, die jeweils weniger als 10.000 Moden aufweisen, die mit der ersten Multimode-Faser gekoppelt sind, und am Ausgang eine zweite Multimode-Faser aufweist, die mit den leichten Multimode-Fasern gekoppelt ist und einen einzelnen Kern für die Ausgabe der ersten Laserpulse aufweist.

**9.** System zur Erzeugung von Laserpulsen nach einem der vorhergehenden Ansprüche, wobei die Faservorrichtung (110) mindestens eine dotierte Faser zur optischen Vorverstärkung der ersten Laserpulse aufweist.

**10.** Verfahren zur Erzeugung von Laserpulsen mit hoher Spitzenleistung, das folgende Schritte aufweist:

- Aussenden von ersten Laserpulsen ($I_L$) im Nanosekundenbereich;
- Transportieren der ersten Laserpulse ($I_L$) durch eine Faservorrichtung (110), die mindestens eine erste Multimode-Faser mit einem einzelnen Kern aufweist, in den die ersten Laserpulse eingeleitet werden;
- zeitliche Formung der ersten Laserpulse vor dem Transport durch die Faservorrichtung, wobei die zeitliche Formung das Reduzieren der spektralen Leistungsdichte durch Reduzieren der zeitlichen Kohärenz der ersten Laserpulse mittels einer reflektierenden Drehvorrichtung (22-25), die um eine vorgegebene Rotationsachse (221, 232, 242, 252) rotiert und derart ausgebildet ist, dass sie die einfallenden ersten Laserpulse mit einer Spektralverbreiterung vom Typ Doppler reflektiert.

**11.** Verfahren zur Erzeugung von Laserpulsen nach Anspruch 10, ferner aufweisend das räumliche Formen der ersten Laserpulse vor dem Transport durch die Faservorrichtung, wobei das räumliche Formen das Vereinheitlichen der räumlichen Spitzenleistung der ersten Laserpulse umfasst.

**12.** Verfahren zur Erzeugung von Laserpulsen nach Anspruch 10 oder 11, ferner aufweisend das optische Verstärken der ersten Laserpulse mittels mindestens eines ersten optischen Verstärkers, der am Ausgang der Faservorrichtung angeordnet ist, um die Laserpulse mit hoher Spitzenleistung zu bilden.

**Claims**

**1.** A high-peak-power laser pulse generation system (10), comprising:

- at least one first light source (101) for emitting first laser pulses ($I_L$) comprising one or more laser line(s);
- a fiber device (110) for transporting said first laser pulses, comprising at least one first multimode fiber with a single core designed to receive said first laser pulses;
- a module (102) for temporally shaping said first laser pulses, arranged upstream of the fiber device, configured so as to reduce the power spectral density of said first laser pulses by reducing the temporal coherence, wherein the laser pulse generation system is **characterized in that**:

- said first laser pulses ($I_L$) are nanosecond laser pulses, and
- said temporal shaping module comprises a rotating reflective device (22 - 25) rotating about a given axis of rotation, configured so as to reflect said first laser pulses ($I_L$) with Doppler spectral broadening.

2. The laser pulse generation system as claimed in claim 1, wherein said rotating reflective device comprises at least one first reflective surface exhibiting rotational or oscillating movement about said axis of rotation.

3. The laser pulse generation system as claimed in claim 2, wherein, with said first laser pulses being emitted with a given repetition frequency, the rotational or oscillating speed of said at least one reflective surface is synchronized with said repetition frequency of the first laser pulses, such that each of said first laser pulses is incident on said at least one reflective surface with a constant angle of incidence.

4. The laser pulse generation system as claimed in either one of claims 2 and 3, wherein said rotating reflective device comprises N reflective surfaces (N $\geq$ 2) and N - 1 deflector mirrors configured so as to return each of said first laser pulses from each of said reflective surfaces, all of said reflective surfaces exhibiting rotational or oscillating movement about said axis of rotation.

5. The laser pulse generation system as claimed in any one of the preceding claims, wherein said temporal shaping module (102) furthermore comprises means configured so as to increase the number of laser line(s) contained in said first laser pulses.

6. The laser pulse generation system as claimed in any one of the preceding claims, furthermore comprising a module (103) for spatially shaping said first laser pulses, arranged upstream of the fiber device, configured so as to standardize the power spatial density of said pulses.

7. The laser pulse generation system as claimed in any one of the preceding claims, furthermore comprising at least one first optical amplifier (120) arranged at the output of said fiber device for optically amplifying said first laser pulses.

8. The laser pulse generation system as claimed in any one of the preceding claims, wherein said fiber device (110) comprises, at input, said first multimode fiber, a set of slightly multimode fibers, i.e., a set of fibers comprising each fewer than 10 000 modes, coupled with said first multimode fiber, and, at output, a second multimode fiber, coupled with said slightly multimode fibers and comprising a single core for the output of said first laser pulses.

9. The laser pulse generation system as claimed in any one of the preceding claims, wherein said fiber device (110) comprises at least one doped fiber for optically preamplifying said first laser pulses.

10. A high-peak-power laser pulse generation method, comprising:

- emitting first nanosecond laser pulses ($I_L$);
- transporting said first laser pulses ($I_L$) via a fiber device (110) comprising at least one first multimode fiber with a single core into which said first laser pulses are injected;
- temporally shaping said first laser pulses prior to transportation by the fiber device, said temporal shaping comprising reduction of the power spectral density by reducing the temporal coherence of said first laser pulses by way of a rotating reflective device (22 - 25) rotating about a given axis of rotation (221, 232, 242, 252), configured so as to reflect said first incident pulses with Doppler spectral broadening.

11. The laser pulse generation method as claimed in claim 10, furthermore comprising spatially shaping said first laser pulses prior to transportation by the fiber device, said spatial shaping comprising standardizing the power spatial density of said first laser pulses.

12. The laser pulse generation method as claimed in either one of claims 10 and 11, furthermore comprising optically amplifying said first laser pulses by way of at least one first optical amplifier arranged at the output of the fiber device in order to form said high-peak-power laser pulses.

FIG.1

EP 3 804 050 B1

FIG.2A

EP 3 804 050 B1

FIG.2B

FIG.2C

FIG.2D

EP 3 804 050 B1

FIG.3A

FIG.3B

FIG.4A

FIG.4B

FIG.5

FIG.6

EP 3 804 050 B1

## RÉFÉRENCES CITÉES DANS LA DESCRIPTION

**Documents brevets cités dans la description**

- US 6002102 A
- EP 1528645 A
- US 4937421 A
- US 6818854 B
- US 2014293404 A

**Littérature non-brevet citée dans la description**

- **P. SINGH et al.** nonlinear scattering effects in optical fibers. *Progress In Electromagnetics Research, PIER,* 2007, vol. 74, 379-405
- **D. NOORDEGRAAF. et al.** Multi-mode to single mode conversion in a 61 port photonic lantern. *Optics Express,* 2010, vol. 18 (5), 4673-4678